# EUROPÄISCHE PATENTSCHRIFT

(11) **EP 2 338 721 B1**
(45) Veröffentlichungstag und Bekanntmachung des Hinweises auf die Patenterteilung: **15.11.2017**
(21) Anmeldenummer: 10015872.4
(22) Anmeldetag: 21.12.2010
(51) Int. Cl.: B60L 3/10, B60L 7/18, B60L 15/20, B60L 7/22

(54) **Flurförderzeug mit einer Anti-Blockier-Einheit zum Vermeiden oder Reduzieren eines Blockierens eines Laufrades**
Industrial truck with an anti-blocking unit for preventing or reducing the blockage of a wheel
Chariot de manutention doté d'une unité antiblocage pour éviter ou réduire le blocage d'une roue porteuse

(30) Priorität: 22.12.2009 DE 102009060408; 08.06.2010 DE 102010022955
(43) Veröffentlichungstag der Anmeldung: 29.06.2011
(73) Patentinhaber: VOLK Fahrzeugbau GmbH, 88339 Bad Waldsee (DE)
(72) Erfinder: Baur, Matthias, 89075 Ulm (DE)
(74) Vertreter: Otten, Roth, Dobler & Partner mbB Patentanwälte

(56) Entgegenhaltungen:
- EP-A2- 1 712 401
- WO-A1-2005/007474
- GB-A- 2 357 200
- US-A1- 2008 100 132

## Beschreibung

Die vorliegende Erfindung bezieht sich auf elektrisch angetriebene Flurförderzeuge, insbesondere Hybrid-Fahrersitz-Zugmaschinen oder Elektro-Fahrersitz-Zugmaschinen.

Ein Hybridantrieb im Sinne der vorliegenden Erfindung ist insbesondere dadurch charakterisiert, dass das Fahrzeug über mindestens zwei Energieumwandler und mindestens zwei Energiespeichersysteme verfügt. Als Energieumwandler kommen beispielsweise Diesel-, Otto- und Elektromotoren bzw. Generatoren sowie Brennstoffzellen in Betracht. Als Energiespeicher kommen beispielsweise Tanks für Dieselkraftstoff, Ottoksaftstoff, Wasserstoff, Methanol, zu reformierende Kohlenwasserstoffe oder Ähnliches sowie Batterien bzw. Akkumulatoren in Betracht.

Zwei beispielhafte Strukcurvarianten für eine Hybrid-Fahrersitz-Zugmaschine im Sinne der vorliegenden Erfindung sind:
1. Eine Zugmaschine mit wenigstens einem Dieselmotor, welcher wenigstens einen Generator antreibt, welcher wiederum die elektrische Energie zum Laden wenigstens einer Traktionsbatterie und/oder zum Betreiben wenigstens eines elektrischen Antriebsmotors erzeugt. Zum Betreiben des Dieselmotors verfügt das Fahrzeug über wenigstens einen Dieseltank. Ein entsprechendes Fahrzeug kann prinzipiell als Parallel-Hybrid-Fahrzeug oder als Seriell-Hybrid-Fahrzeug ausgestaltet sein, wobei die zuletzt genannte Variante besonders vorteilhaft ist.
2. Eine Zugmaschine mit wenigstens einer Brennstoffzelle, welche die elektrische Energie zum Laden wenigstens einer Traktionsbatterie und/oder zum Betreiben wenigstens eines elektrischen Antriebsmotors erzeugt. Zum Betreiben der Brennstoffzelle verfügt das Fahrzeug über wenigstens einen Tank für Wasserstoff, Methanol, zu reformierende Kohlenwasserstoffe oder Ähnliches.

Zwei beispielhafte Strukturvarianten für eine Elektro-Fahrersitz-Zugmaschine im Sinne der vorliegenden Erfindung sind:
1. Eine Zugmaschine mit wenigstens einer Traktionsbatterie zum Betreiben wenigstens eines elektrischen Antriebsmotors.
2. Eine Zugmaschine mit wenigstens einer Brennstoffzelle zum Betreiben wenigstens eines elektrischen Antriebsmotors. Zum Betreiben der Brennstoffzelle verfügt das Fahrzeug über wenigstens einen Tank für Wasserstoff, Methanol, zu reformierende Kohlenwasserstoffe oder Ähnliches.

### Einführung und Problemhintergrund

Bei innerbetrieblichen Transportaufgaben in der Industrie oder beim Gepäck- und Cargohandling auf Flughäfen werden relativ hohe Anhängelasten von beispielsweise 20 Tonnen und mehr mit Geschwindigkeiten von zum Teil 20 km/h und mehr bewegt. Da die verwendeten Anhänger häufig ungebremst sind, also beispielsweise nicht über eine Druckluftbremsanlage oder eine Auflaufbremse verfügen, ist ein hohes Eigengewicht der Zugmaschine erforderlich, um ein sicheres Abbremsen des Zuges zu gewährleisten. Die für das Flughafen-Vorfeld relevante Norm BGV C 10 sieht zum Beispiel bei einer Anhängelast von 17,2 Tonnen ein Eigengewicht der Zugmaschine von mindestens 6 Tonnen vor. Dieses hohe Gewicht wird durch einen Fahrzeugrahmen aus massiven Stahlplatten mit einer Dicke von zum Teil 10 cm und mehr realisiert.

Trotz des hohen Eigengewichtes ergeben sich bei Zugmaschinen entsprechend des Stands der Technik Probleme, wenn mit hohen Anhängelasten stark abgebremst wird. Denn beim Bremsen kommt es zu einer Einleitung der kinetischen Energie der Anhängelast auf das Zugfahrzeug und folglich zu einer Entlastung des Fahrzeughecks. Dies hat eine Verringerung der auf die Hinterräder wirkenden Normalkraft und folglich auch eine Reduzierung der Haftreibungs-Gesamtkraft an der Hinterachse zur Folge. Übersteigt nun die von den Rädern zu übertragende Bremskraft die zur Verfügung stehende Haftreibungs-Gesamtkraft, dann kommt es zum Blockieren der Räder.

Aus den dargestellten Gründen wird die Blockiergrenze im Zugmaschineneinsatz häufig an der Hinterachse zuerst erreicht. Dies ist eine äußerst gefährliche und potentiell unfallträchtige Situation, da das Fahrzeugheck unter Umständen durch die Anhänger "weggeschoben" wird und das Fahrzeug dann nur noch sehr schwer zu kontrollieren ist.

Da die Haftreibungs-Gesamtkraft, die die einzelnen Räder auf die Fahrbahn übertragen können, einerseits von der auf die Räder wirkenden Normalkraft und andererseits vom Reibungskoeffizienten zwischen Reifen und Fahrbahnoberfläche abhängt, stellt sich das skizzierte Problem vor allem bei ungünstigen Witterungsverhältnissen, wie z.B. Nässe, Matsch oder Schnee, da dann zusätzlich der Reibungskoeffizient zwischen Reifen und Fahrbahnoberfläche reduziert ist.

Der Einsatz konventioneller ABS-Systeme, wie sie beispielsweise in Personenkraftwagen (PKW) seit längerem zum Einsatz kommen, ist in entsprechenden Flurförderzeugen nicht möglich, da diese sich in zahlreichen Konstruktionsmerkmalen von PKW unterscheiden und die Einmalkosten der Anpassung eines PKW-ABS-Systems aufgrund der branchentypisch sehr geringen Produktionsstückzahlen von wenigen hundert Fahrzeugen pro Jahr nicht am Markt amortisierbar sind.

Aus der EP 1 712 401 A2 ist eine Steuerung für Flurförderzeuge bekannt.

Die GB 2 357 200 A offenbart einen Gabelstapler mit einem oberen Geschwindigkeitsbereich, wobei dessen Bremskraft dem maximalen Bremsmoment bzw. der maximalen Bremskraft entspricht und einen unteren Geschwindigkeitsbereich, wobei dessen realisierte Bremskraft kleiner als die maximal realisierbare Bremskraft ist.

Diese Gabelstaplersteuereinrichtung hat die Aufgabe, ein aufgrund des regenerativen Bremssystems generiertes diskontinuierliches Anhalten des Gabelstaplers wirkungsvoll zu verhindern, sodass die von dem Gabelstapler transportierte Lasten nicht zusammenbrechen oder herunter fallen.

### Aufgabe und Vorteile der Erfindung

Hier setzt die vorliegende Erfindung an, indem ein Bremssystem bzw. eine Regelung für Flurförderzeuge vorgeschlagen wird, so dass bei Flurförderzeugen, insbesondere Hybrid-Fahrersitz-Zugmaschinen und Elektro-Fahrersitz-Zugmaschinen, eine wirkungsvolle Anti-Blockier-Funktion realisiert wird, die insbesondere vergleichsweise konstruktiv einfach und kostengünstig ist.

Diese Aufgabe wird, ausgehend von einem Flurförderzeug der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Für die Erfindung bzw. für verschiedene Varianten der Erfindung sind unter anderem die nachfolgend aufgelisteten Maßnahmen bzw. Abschnitte von besonderer Bedeutung:
1. Flurförderzeuge, insbesondere Hybrid-Fahrersitz-Zugmaschinen oder Elektro-Fahrersitz-Zugmaschinen, sind - anders als beispielsweise PKW - durch einen ausgeprägt progressiven Bremsverlauf mit anfangs nur relativ geringer Bremsverzögerung gekennzeichnet.

Die Friktionsbremsanlage von Flurförderzeugen ist relativ schwach dimensioniert, jedoch ist das rekuperative Bremsmoment bei elektrisch angetriebenen Flurförderzeugen, insbesondere Hybrid-Fahrersitz-Zugmaschinen oder Elektro-Fahrersitz-Zugmaschinen, sehr hoch. Die eingesetzten Elektromotoren erzielen ein Drehmoment von beispielsweise 500 Nm und mehr, welches über eine hohe Getriebetibersetzung von beispielsweise i=24 und mehr auf die Antriebsräder einwirkt, so dass sich ein rekuperatives Bremsmoment von beispielsweise 12.000 Nm ergibt.

Die Charakteristik des Bremsverhaltens von elektrisch angetriebenen Flurförderzeugen ist somit in hohem Maß durch die Eigenschaften der rekuperativen Bremsanlage bestimmt. Aufgrund des typischen Drehmomentverlaufs von Elektromotoren nimmt die Stärke der rekuperativen Abbremsung mit abnehmender Fahrgeschwindigkeit bis zum Stillstand kontinuierlich zu.

Sieht man von Besonderheiten bei extrem hoher thermischer Belastung ab, so ist das Bremsverhalten einer Friktionsbremsanlage in der Regel durch eine annähernd konstante Bremsverzögerung während des gesamten Bremsvorgangs gekennzeichnet. Lediglich zu Beginn des Bremsvorgangs, während der sogenannten Schwelldauer bis zum vollständigen Aufbau des Bremsdrucks, ist die Bremsverzögerung niedriger. Bei Flurförderzeugen fällt diese Schwelldauer allerdings aufgrund des typischerweise sehr niedrigen Geschwindigkeitsbereichs von 0 bis 30 km/h bezogen auf die Gesamtdauer des Bremsvorgangs überproportional ins Gewicht.

So kann daher hervorgehoben werden: Das Bremsverhalten von elektrisch angetriebenen Flurförderzeugen wird in wesentlichem Maß durch die Stärke der rekuperativen bzw. elektrischen Abbremsung beeinflusst. Für diese ist kennzeichnend, dass sie bis zum Stillstand kontinuierlich zunimmt. Daraus folgt ein progressiver Bremsverlauf, also ein Verzögerungsverlauf mit zunehmender Grenzrate. Dieser wird noch dadurch unterstrichen, dass aufgrund der geringen Maximalgeschwindigkeit von nur z.B. 30 km/h die sogenannte Schwelldauer der Friktionsbremsanlage bezogen auf die gesamte Bremsdauer überproportional ins Gewicht fällt.
2. Bei Flurförderzeugen ist die Blockierneigung zu Beginn eines Bremsvorgangs relativ niedrig, so dass gemäß der Erfindung der gesamte Bremsvorgang, mit Blick auf die Blockierneigung der Antriebsräder, in einen die Maximalgeschwindigkeit aufweisenden "unkritischen" Bereich und einen den Stillstand beinhaltenden "kritischen" Bereich unterteilt wird.
3. Erfindungsgemäß kann wenigstens bis zum Erreichen der Grenze zwischen dem oberen und unteren Geschwindigkeitsbereich mit voller Bremskraft gebremst werden, so dass im "unkritischen" Bereich eine bestmögliche Bremsverzögerung realisiert werden kann. Danach kann dann in vorteilhafter Weise die Bremskraft reduziert werden, so dass im "kritischen" Bereich ein bestmöglicher Blockierschutz mit vorteilhafter Bremswirkung realisiert werden kann.
4. Erfindungsgemäß kann die Grenze zwischen dem oberen, "unkritischen" und dem unteren, "kritischen" Geschwindigkeitsbereich auf unterschiedliche Weise definiert werden:

Vorteilhaft ist es zunächst, diese Grenze über wenigstens einen Parameter zu definieren, der beispielsweise in unmittelbarem Zusammenhang mit der (Winkel-) Geschwindigkeit bzw. Drehzahl eines Lauf-/Antriebsrades steht. Dies kann beispielsweise die Frequenz der Fahrsteuerung, die Drehzahl des Elektromotors, die Winkel- oder die Radumfangsgeschwindigkeit eines Lauf- bzw. Antriebsrades und/oder die Fahrgeschwindigkeit des Fahrzeugs (vgl. hierzu den nachfolgenden Abschnitt 5) sein.

Gemäß der Erfindung wird die Grenze zwischen dem unteren und dem oberen Geschwindigkeitsbereich über wenigstens eine Zeitdauer definiert, welche seit der Initiierung des Bremsvorgangs verstrichen ist (vgl. hierzu Abschnitt 6).

In einer besonders vorteilhaften Ausführungsvariante ist es schließlich möglich, beide vorgenannten Ansätze miteinander zu kombinieren (vgl. hierzu Abschnitt 7).
5. Drehzahl wenigstens eines Antriebsrades

Die Grenze zwischen dem oberen, "unkritischen" und dem unteren, "kritischen" Geschwindigkeitsbereich kann erfindungsgemäß mittels eines Schwellwerts der Winkel-Geschwindigkeit bzw. der Drehzahl wenigstens eines Lauf- bzw. Antriebsrades definiert werden.

Alternativ bzw. ergänzend zur Drehzahl der Antriebsräder können entsprechende Grenz-/Schwellwerte auch für die Radumfangsgeschwindigkeit eines Lauf-/Antriebsrades und/oder die Drehzahl eines Elektromotors und/oder die Frequenz der elektronischen Fahrsteuerung, insbesondere AC-Inverter, definiert werden. Da alle genannten Größen im Regelfall miteinander korrespondieren, soll in den nachstehenden Ausführungen aus Vereinfachungsgründen vorrangig der Parameter bzw. Indikator "Drehzahl der Antriebsräder" beleuchtet werden, was jedoch eine erfindungsgemäße Übertragung der entsprechend vorteilhaften Verwendung der anderen genannten Parameter bzw. Indikatoren nicht ausschließt. Die Argumentation bzw. Anwendung verläuft in diesen Fällen analog.

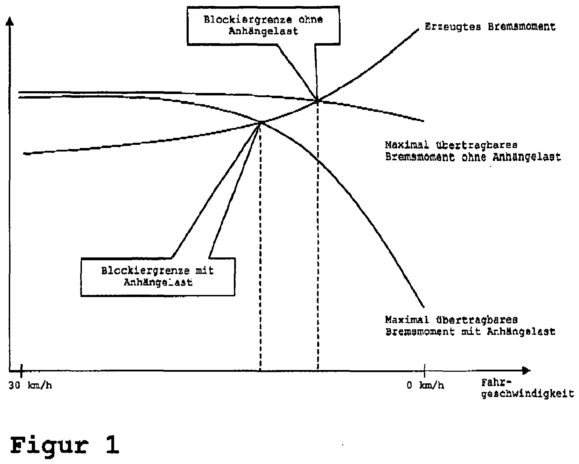

Grundlegend ist der erfinderische Gedanke, dass sowohl die Bremskraft wie auch die zur Verfügung stehende Haftreibungs-Gesamtkraft eine Funktion der Fahrgeschwindigkeit oder Laufradgeschwindigkeit bzw. der Drehzahl des elektrischen Antriebsmotors sind (vgl. hierzu Fig. 1). Daher gibt es eine Winkel-Geschwindigkeit bzw. eine Drehzahl des elektrischen Antriebsmotors, bei deren Unterschreitung die Bremskraft die zur Verfügung stehende Haftreibungs-Gesamtkraft übersteigt. Die Bremskraft sollte daher spätestens dann reduziert werden, wenn diese Geschwindigkeit bzw. Drehzahl unterschritten wird.

In einer besonderen Ausführungsvariante ist denkbar, lediglich einen solchen Grenzwert zu definieren. Dieser könnte sich beispielsweise an einem Worst-Case-Szenario orientieren, so dass auch bei besonders ungünstiger Ausprägung relevanter situativer Einflussfaktoren (beispielsweise Reibwert zwischen Fahrbahn und Rädern, Anhängelast, Kurvenradius, Bremsanfangsgeschwindigkeit, Fahrbahnneigung, intendierte Bremsverzögerung etc.) ein ausreichender Blockierschutz gegeben ist.

In einer vorteilhaften Weiterbildung der vorliegenden Erfindung können mehrere verschiedene Grenzwerte vorgesehen werden, welche insbesondere in Abhängigkeit von den konkreten situativen Randbedingungen definiert sind. So ist es beispielsweise möglich, bei einer sogenannten Vollbremsung (hohe intendierte Bremsverzögerung) einen höheren Geschwindigkeits- bzw. Drehzahl-Grenzwert zugrunde zu legen als bei einer schwachen Bremsung. Beim Durchfahren einer Kurve könnte beispielsweise ein höherer Grenzwert herangezogen werden als bei Geradeausfahrt. Und bei einer hohen Bremsanfangsgeschwindigkeit könnte der Grenzwert höher angesetzt werden, als bei einer geringen Bremsanfangsgeschwindigkeit.

Bei anderen situativen Einflussfaktoren, wie insbesondere der im Zugmaschineneinsatz besonders wichtigen Höhe der gezogenen Anhängelast, ist es dagegen schwieriger, diese in operationaler Weise bei der Festlegung des Geschwindigkeits- bzw. Drehzahl-Grenzwertes zwischen dem oberen, "kritischen" und dem unteren, "unkritischen" Geschwindigkeitsbereich zu berücksichtigen. Denn während beispielsweise die Höhe der Bremsanfangsgeschwindigkeit, das Vorliegen einer Vollbremsung oder die Überschreitung eines bestimmten Lenkwinkels relativ gut mittels einer - zum Teil ohnehin bereits im Fahrzeug vorhandenen - vorteilhaften Sensorik festgestellt werden können, wäre dies mit Blick auf die Anhängelast mit erhöhtem Aufwand auch denkbar.

In einer weiteren vorteilhaften Ausführungsvariante könnte zumindest der untere, "kritische" Geschwindigkeitsbereich durch mindestens einen weiteren Geschwindigkeits- bzw. Drehzahl-Grenz-/Schwellwert in wenigstens zwei Teilabschnitte unterteilt werden, so dass die Bremskraft in den verschiedenen Teilabschnitten unterschiedlich stark reduziert werden kann, d.h. unterschiedliche Reduktionsfaktoren aufweisen.

Nimmt die Drehzahl der Antriebsräder wieder zu, beispielsweise weil auf griffigerem Fahrbahnbelag die Haftreibungs-Gesamtkraft steigt und die Blockierneigung folglich wieder abnimmt, so wird die zulässige Stärke der Abbremsung wieder erhöht. In einer bevorzugten Variante der Erfindung kann hierbei der gleiche Grenz-/Schwellenwert bzw. die gleichen Grenz-/Schwellwerte verwendet werden, wie auch bei der vorangegangenen Reduktion der Bremskraft.

Eine solche Vorgehensweise könnte möglicherweise jedoch unter besonders ungünstigen Bedingungen zu Aufschwingungs- und/oder Oszillationseffekten führen. Letztere könnten sich beispielsweise folgendermaßen darstellen: Wird der Reduktionsfaktor bzw. die Stärke der Abbremsung reduziert, so kann es zu einer Abnahme der Blockierneigung und infolgedessen zu einer Zunahme der Drehgeschwindigkeit der Antriebsräder kommen. Dies wiederum führt dazu, dass die Stärke der elektrischen Abbremsung wieder erhöht wird, was dann wieder eine Zunahme der Blockierneigung und infolgedessen eine Abnahme der Drehgeschwindigkeit zur Folge hat. Beachtet man die endliche Regelungsgeschwindigkeit der entsprechenden Anpassungsschritte und berücksichtigt man ferner, dass die beschriebene Oszillationscharakteristik ihrerseits in einen äußerst dynamischen und komplexen Prozess, z.B. die Verzögerung eines Fahrzeugs auf möglicherweise wechselndem Fahrbahnbelag, eingebettet ist, so wird deutlich, dass es hier durchaus zu additiven und über-additiven Effekten kommen kann, die ein Aufschwingen zur Folge haben könnten.

In einer vorteilhaften Weiterbildung der Erfindung sind die Reduktionsfaktoren bzw. Prozesse der Absenkung der Stärke der (elektrischen) Abbremsung und der Anhebung der Stärke der Abbremsung in vorteilhafter Weise asymmetrisch bzw. ungleich/unterschiedlich. Besonders vorteilhaft ist es dabei, wenn die Reduktionsfaktoren bzw. der Prozess der Reduktion und der Anhebung der Stärke der erfindungsgemäßen Abbremsung einer sogenannten Hysteresefunktion folgt. So könnten beispielsweise die Grenz-/Schwellwerte für die Anhebung der Stärke der als die korrespondierenden Grenz-/Schwellwerte für die Absenkung der Stärke der zulässigen Abbremsung.

In einer vorteilhaften Variante der Erfindung könnte der Anpassungsverlauf bzw. der Reduktionsfaktor im Fall einer Absenkung bzw. im Fall einer Anhebung unterschiedlich ausgestaltet werden.

Da sich der skizzierte Prozess innerhalb von Sekundenbruchteilen vollzieht, ist eine sehr schnelle Regelung vorteilhaft bzw. erforderlich. Hierzu können beispielsweise entsprechende Drehzahl-Sensoren verwendet werden. Bei einer Variante elektrisch angetriebener Flurförderzeuge gemäß der Erfindung ist eine solche Sensorik jedoch gar nicht zwingend erforderlich, da hier beispielsweise auf Drehzahlinformationen des Elektromotors, beispielsweise des Encoders, und/oder aus der elektronischen Fahrsteuerung, insbesondere AC-Inverter, zurückgegriffen werden kann. Letzteres bietet den Vorteil einer sehr hohen Regelungsgeschwindigkeit, da die Signalverarbeitung und Regelung in diesem Fall vollständig innerhalb der elektronischen Fahrsteuerung, insbesondere AC-Inverter, erfolgen kann.

So kann "hervorgehoben werden, dass ein wesentlicher Vorteil der Erfindung, insbesondere des Parameters bzw. Indikators "Drehzahl wenigstens eines Lauf-/Antriebsrades", darin besteht, dass er sich besonders einfach und ohne großen technischen Aufwand ermitteln lässt, so dass sich eine sehr vorteilhafte, kostengünstige Anti-Blockier-Einrichtung für Flurförderzeuge, insbesondere Hybrid-Fahrersitz-Zugmaschinen oder Elektro-Fahrersitz-Zugmaschinen, realisieren lässt.

Allerdings ist beim Parameter bzw. Indikator "Drehzahl wenigstens eines Lauf-/Antriebsrades" zu beachten, dass die Drehzahl, ab welcher die Blockiergrenze der Antriebsräder erreicht wird, gegebenenfalls von verschiedenen situativen Einflussfaktoren abhängt, welche zum Teil nicht in operationaler Weise bei der Festlegung des Geschwindigkeits- bzw. Drehzahl-Grenzwertes zwischen dem oberen, "unkritischen" und dem unteren, "kritischen" Geschwindigkeitsbereich berücksichtigt werden können. Dies gilt insbesondere für die Höhe der Anhängelast.

Fig. 1 veranschaulicht, dass die Restgeschwindigkeit, ab der die zu übertragende Bremskraft die zur Verfügung stehende Haftreibungs-Gesamtkraft übersteigt, bei einem Flurförderzeug mit Anhängelast relativ hoch liegen kann. Denn durch die Einleitung der kinetischen Energie der Anhängelast kommt es beim Bremsvorgang zu einer Entlastung des Fahrzeughecks und somit zu einer Verringerung der zur Verfügung stehenden Haftreibungs-Gesamtkraft. Bei einem Flurförderzeug ohne Anhängelast wird das Fahrzeugheck dagegen während des Bremsvorgangs nur vergleichsweise geringfügig entlastet. Angesichts der Tatsache dass erfindungsgemäße Zugmaschinen schon alleine aus Traktionsgründen über eine sehr hohe Hinterachslast von beispielsweise 3 Tonnen oder mehr verfügen, übersteigt die erzeugte Bremskraft bei einem Flurförderzeug ohne Anhängelast daher allenfalls ganz gegen Ende des Bremsvorgangs, bzw. bei einer sehr geringen Restgeschwindigkeit, die maximal zur Verfügung stehende Haftreibungs-Gesamtkraft.

Es ergibt sich somit ein Zielkonflikt zwischen optimalem Blockierschutz und bestmöglicher Bremsverzögerung: Setzt man den Grenzwert zwischen dem oberen, "unkritischen" Bereich und dem unteren, "kritischen" Bereich sehr hoch an, um auch bei ungünstigen Rahmenbedingungen einen bestmöglichen Blockierschutz zu realisieren, so bleibt die Bremsverzögerung bei optimalen äußeren Rahmenbedingungen hinter der maximal möglichen Bremsverzögerung zurück. Setzt man den Grenzwert dagegen - im umgekehrten Fall - sehr niedrig an, so kann zwar unter optimalen Bedingungen eine sehr hohe Bremsverzögerung realisiert werden; unter ungünstigen Bedingungen ist dann jedoch kein ausreichender Blockierschutz mehr gegeben.

Um dies zu vermeiden bzw. zu kompensieren, wird gemäß einer besonderen Weiterbildung der Erfindung eine zeitabhängige Modulation der Stärke der elektrischen und/oder mechanischen Abbremsung vorgeschlagen, bei die Stärke bzw. das Maß der Abbremsung in Abhängigkeit von der seit Beginn eines Bremsvorgangs bereits verstrichenen Zeit reduziert wird.
6. Latenzzeit

Der stark progressive Bremsverlauf von Flurförderzeugen, insbesondere Hybrid-Fahrersitz-Zugmaschinen und Elektro-Fahrersitz-Zugmaschinen, hat zur Folge, dass die erzeugte Bremskraft bei höheren Fahrgeschwindigkeiten zunächst noch vergleichsweise gering und somit zumeist deutlich niedriger ist als die maximal zur Verfügung stehende Haftreibungs-Gesamtkraft, welche durch die auf das Rad wirkende Normalkraft sowie den Reibwert zwischen Rad und Fahrbahnoberfläche determiniert ist (vgl. hierzu Fig. 1).

Bei einer Bremsung aus höheren Fahrgeschwindigkeiten ist die Blockierneigung zu Beginn des Bremsvorgangs somit selbst bei hoher Anhängelast zunächst noch sehr gering. Aufgrund der zunächst noch vergleichsweise geringen Bremskraft ist auch die resultierende Verzögerung des Flurförderzeugs bei einer hohen Bremsanfangsgeschwindigkeit anfangs relativ gering. Eine geringe Verzögerung hat wiederum zur Folge, dass durch die Anhänger zunächst nur eine vergleichsweise geringe kinetische Energie auf das Zugfahrzeug eingeleitet wird und somit die auf das Heck der Zugmaschine einwirkende Normalkraft anfangs nur in geringem Umfang reduziert wird. Dies bedeutet, dass die maximal zur Verfügung stehende Haftreibungs-Gesamtkraft eines Flurförderzeugs mit Anhängelast bei höherer Fahrgeschwindigkeit zunächst nur geringfügig niedriger ist als bei einem Flurförderzeug ohne Anhängelast (vgl. hierzu Fig. 1).

Erst bei abnehmender Restgeschwindigkeit kommt es beim Flurförderzeug mit Anhängelast aufgrund der progressiv ansteigenden Bremskraft zu einer ebenfalls progressiv ansteigenden Entlastung des Fahrzeughecks durch Einleitung der kinetischen Energie des Anhängers. Aufgrund dieser Scherenwirkung nimmt die Blockierneigung bei einem Flurförderzeug mit Anhängelast mit abnehmender Fahrgeschwindigkeit exponentiell zu (vgl. hierzu Fig. 1).

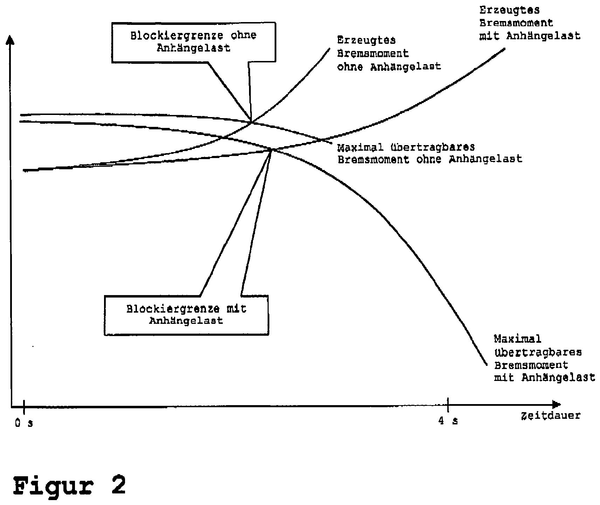

Stellt man die Verläufe der erzeugten Bremskraft und der maximal zur Verfügung stehenden Haftreibungs-Gesamtkraft in Abhängigkeit von der seit Initiierung eines Bremsvorgangs verstrichenen Zeit dar (vgl. hierzu Fig. 2), so wird deutlich, dass die Blockiergrenze bei einem Flurförderzeug ohne Anhängelast tendenziell früher (d.h. nach kürzerer Zeitdauer seit Initiierung des Bremsvorgangs) erreicht wird als bei einem Flurförderzeug mit Anhängelast.

Der progressive Bremsverlauf ergibt sich - wie dargelegt - alleine aus den technischen Parametern von Flurförderzeugen, insbesondere Hybrid-Fahrersitz-Zugmaschinen und Elektro-Fahrersitz-Zugmaschinen. Er wird aber in der Praxis durch das Verhalten der Fahrer erfindungsgemäßer Flurförderzeug noch verstärkt. Denn bei hoher Anhängelast und/oder bei schlechten Fahrbahnbedingungen treten diese bei Initiierung eines Bremsvorgangs in der Regel nicht gleich voll in die Bremse, sondern erhöhen den Bremsdruck nur langsam.

Ab dem Zeitpunkt der Initiierung eines Bremsvorgangs gibt es folglich ein Zeitfenster, während dem die von der Bremsanlage erzeugte Bremskraft geringer ist als die maximal zur Verfügung stehende Haftreibungs-Gesamtkraft. Da ein Flurförderzeug ohne Anhängelast deutlich schneller verzögert als ein Flurförderzeug mit Anhängelast, ist die Restgeschwindigkeit nach Verstreichen dieses Zeitfensters im erstgenannten Fall deutlich niedriger. Bei einer im Wesentlichen zeitabhängigen Modulation der Bremsstärke liegt somit die Restgeschwindigkeit, ab welcher die Bremskraft reduziert wird, mit Anhängelast niedriger als ohne Anhängelast. Dadurch wird der oben skizzierte Zielkonflikt zwischen optimalem Blockierschutz und bestmöglicher Bremsverzögerung deutlich entschärft.

Eine zeitabhängige Modulation der Stärke der Abbremsung kann zum Beispiel dadurch realisiert werden, dass in vorteilhafter Weise wenigstens eine Zeitspanne definiert wird, welche zwischen einer definierten Aktion bzw. einem definierten Ereignis und dem verzögerten Eintreten einer entsprechenden Reaktion mindestens verstreichen muss. Derartige Zeitspannen sollen im Folgenden als Latenzzeit bezeichnet werden.

In einer vorteilhaften Ausführungsvariante der Erfindung kann lediglich eine einzige Latenzzeit definiert werden. Diese kann sich beispielsweise an einem Worst-Case-Szenario orientieren, so dass auch bei besonders ungünstiger Ausprägung relevanter situativer Einflussfaktoren (beispielsweise Reibwert zwischen Fahrbahn und Rädern, Anhängelast, Kurvenradius, Bremsanfangsgeschwindigkeit Fahrbahnneigung, intendierte Bremsverzögerung etc.) ein ausreichender Blockierschutz gegeben ist.

In einer besonders vorteilhaften Weiterbildung der vorliegenden Erfindung können mehrere verschiedene Latenzzeiten L1 ... Ln vorgesehen werden, welche beispielsweise in Abhängigkeit von der Höhe der Bremsanfangsgeschwindigkeit und/oder dem Verzögerungswunsch des Fahrers und/oder dem Radius einer während des Bremsvorgangs durchfahrenen Kurve oder dergleichen definiert sind:

### a.) Bremsanfangsgeschwindigkeit

Es ist von Vorteil, dass zum Beispiel die Lange der Latenzzeit im Wesentlichen proportional zur Höhe der Bremsanfangsgeschwindigeit ausgestaltet wird, so dass diese beispielsweise 1,5 Sekunden bei einer Bremsanfangsgeschwindigkeit von 30 km/h beträgt, 0,75 Sekunden bei einer Bremsanfangsgeschwindigkeit von 15 km/h und 0,375 Sekunden bei einer Bremsanfangsgeschwindigkeit von 7,5 km/h. Denkbar ist aber auch, die Latenzzeit so auszugestalten, dass diese mit abnehmender Bremsanfangsgeschwindigkeit überproportional oder unterproportional abnimmt.

In einer besonders vorteilhaften Ausführungsvariante könnte zudem für unterschiedliche Bremsanfangsgeschwindigkeiten jeweils empirisch die minimale blockierfreie Abbremszeit ermittelt werden, um hieraus dann die bei unterschiedlichen Bremsanfangsgeschwindigkeiten jeweils zu berücksichtigenden Latenzzeiten zu ermitteln.

### b) Kurvenradius

Um ein Blockieren der Antriebsräder zuverlässig zu verhindern, sollte die Latenzdauer bei Kurvenfahrt möglichst kurz, insbesondere bei sehr engen Kurvenradien möglicherweise 0, sein. In einer vorteilhaften Weiterbildung der vorliegenden Erfindung können daher eine oder mehrere Latenzzeiten L1 ... Ln definiert werden, welche in Bezug zum Kurvenradius einer durchfahrenen Kurve stehen. Beispielsweise ist es möglich, bei Überschreitung eines definierten Grenz-/Schwellwerts, wenigstens einer in inversem Bezug zum Kurvenradius stehenden Variable, eine kürzere Latenzzeit heranzuziehen.

Darüber hinaus ist es denkbar, mehrere Grenz-/Schwellwerte zu definieren und ausgehend hiervon die Latenzdauer in einem gestaffelten Ansatz diskreter Schritte zu reduzieren, also bei zunehmend kleiner werdendem Kurvenradius zunehmend kürzere Latenzzeiten zugrunde zu legen. Schließlich ist auch eine stufenlose Reduzierung der Latenzdauer bei abnehmendem Kurvenradius möglich. Das heißt unterschiedliche und/oder kontinuierlich sich ändernde Reduktionsfaktoren in Abhängigkeit des (momentanen) Kurvenradius.

Eine in Bezug zum Kurvenradius stehende Variable/Parameter kann beispielsweise der Lenkeinschlag sein, welcher beispielsweise mittels eines vorteilhaften Sensors (z.B. Hallsensor oder Potentiometer oder Drehgeber) erfasst werden kann.

### c) Intendierte Bremsstärke

In einer weiteren vorteilhaften Ausführungsvariante können verschiedene Latenzzeiten L1 ... Ln in Abhängigkeit von wenigstens einer in Bezug zur vom Fahrer intendierten Bremsverzögerung bzw. der vom Fahrer beabsichtigten Bremsstärke/Maß der Bremsung stehenden Variable/Parameter definiert werden. So ist es beispielsweise denkbar, dass bei nur teilweise durchgetretenem Bremspedal eine längere Latenzzeit zugrunde gelegt wird als bei einem voll durchgetretenen Bremspedal.

Wird das Bremspedal beispielsweise zunächst nur leicht und dann im weiteren Bremsverlauf stärker durchgetreten (oder vice versa), so ist es möglich, dass die Latenzdauer während des Bremsvorgangs fortlaufend an den Bremsverlauf angepasst wird, wobei die Anpassung entweder grenzwert- bzw. schwellwertbezogen in diskreten Schritten oder aber stufenlos und kontinuierlich erfolgen kann.

Die Latenzdauer setzt sich in diesem Fall aus verschiedenen Teilintervallen L^{t1} ... L^{tn} zusammen, wobei der Beginn jedes Teilintervalls durch eine Veränderung der Sollwertvorgabe des Fahrers markiert wird. Das Ende eines Teilintervalls L^{tn} wird entweder durch eine erneute Änderung der Sollwertvorgabe des Fahrers (und folglich den Beginn eines neuen Teilintervalls L^{tn+1}) oder aber durch das Verstreichen der anteiligen Latenzdauer des jeweiligen Teilintervalls (und somit das Verstrichen der Latenzdauer in toto) markiert.

Die anteilige Latenzdauer eines Zeitintervalls L^{t1} ... L^{tn} lässt sich beispielsweise in Abhängigkeit von den, der jeweiligen Bremsverzögerungs-Sollwertvorgabe des Fahrers zugeordneten Latenzzeiten L1 bis Ln unter Zugrundelegung eines Pro-Rata-Ansatzes bestimmen.

Beispielsweise ist es möglich, zu berechnen, wie viel Prozent der anfänglich zugrunde gelegten Latenzzeit zum Zeitpunkt der ersten Anpassung bereits verstrichen sind. Die zu 1 bzw. 100% fehlende Differenz dieses Prozentwertes kann dann mit der bei einer Veränderung der vom Fahrer intendierten Verzögerung, also beispielsweise bei verändertem Bremspedalweg, neu anzusetzenden Latenzzeit multipliziert werden, um so zur Latenzzeit L^{t2} zu gelangen.

Sollte mehr als ein Anpassungsschritt erforderlich sein oder die Anpassung stufenlos erfolgen, so bemisst sich die Dauer des Teilintervalls L^{tn} stets als Produkt aus (a.) der Differenz aus der Zahl 1 und dem kumulativen verstrichenen prozentualen Anteil der vorhergehenden Teilintervalle L^{t1}...L^{tn-1} und (b.) der mit der jeweiligen Sollwertvorgabe korrespondierenden Latenzzeit Ln.

Sind mehrere Latenzzeiten (L1 ... Ln) definiert, so soll die konkrete Realisation dieser Latenzzeiten, also die bei einem konkreten Bremsvorgang in Abhängigkeit von der konkreten Ausprägung der relevanten situativen Rahmenbedingungen beizuziehende Latenzzeit bzw. - im Fall einer dynamischen Veränderung dieser Rahmenbedingungen während des Bremsvorgangs - die Gesamtheit bzw. Summe der beizuziehenden anteiligen Latenzzeiten als Latenzdauer bezeichnet werden. Sollte dagegen nur eine Latenzzeit definiert sein, so ist die Latenzdauer mit der Latenzzeit identisch.

In einer besonders vorteilhaften Weiterbildung der vorliegenden Erfindung ist es möglich, die Latenzdauer über ein mehrdimensionales Kennfeld zu ermitteln, aus welchem sich für jede beliebige Kombination relevanter situativer Einflussfaktoren die optimale Latenzdauer ergibt.

Eine Aktion bzw. ein Ereignis, welches im obigen Sinn den Beginn einer Latenzzeit (L1 ... Ln) markiert, soll im Folgenden als latenzzeitinitiierendes Ereignis (LE1 ... LEn) bezeichnet werden. Als latenzzeitinitiierendes Ereignis kommen prinzipiell verschiedenste Ereignisse in Betracht. Besonders vorteilhaft ist es, ein solches Ereignis in der Betätigung der Bremse durch den Fahrer zu sehen.

In einer ersten vorteilhaften Ausführungsvariante kann die erfindungsgemäße Regelung in der Form modifiziert werden, dass nicht die Betätigung der Bremse als latenzzeitinitiierendes Ereignis herangezogen wird, sondern die Überschreitung wenigstens eines Schwellwerts wenigstens einer in Bezug zur vom Fahrer intendierten Bremsverzögerung stehenden Variable.

Eine solche Variable könnte beispielsweise der Pedalweg des Bremspedals sein. Dieser könnte beispielsweise mittels eines Potentiometers oder eines Hallsensors erfasst werden. Alternativ hierzu könnte beispielsweise auch ein (End- bzw. Näherungs-) Schalter am/unter dem Bremspedal angebracht werden, welcher anspricht, sobald das Bremspedal voll durchgetreten wird. Eine weitere denkbare Variable ist der Druck in wenigstens einem Bremskreis, welcher beispielsweise mittels eines Druckmessumformers ermittelt werden kann. Denkbar ist es schließlich auch, verschiedene der vorgenannten Variablen in vorteilhafter Weise miteinander zu verknüpfen bzw. zu kombinieren.

Als Konsequenz kann die Bremszeit beispielsweise erst ab dem Moment gemessen werden, ab der der Fahrer das Bremspedal voll durchtritt, so dass er - unbeschadet der Tatsache, dass er das Bremspedal bereits zuvor leicht betätigt hatte - ab diesem Moment für die gesamte Latenzdauer die volle bzw. maximale Bremskraft zur Verfügung hat.

So könnte neben der vom Fahrer intendierten Stärke der Bremsverzögerung auch die tatsächliche Bremsverzögerung des Flurförderzeugs gemessen werden, beispielsweise mittels eines vorteilhaften Sensors. Hierbei ist jedoch zu beachten, dass sich eine geringe tatsächliche Verzögerung unter Umständen auch einstellen kann, obwohl die vom Fahrer intendierte Bremsverzögerung sehr hoch ist, beispielsweise bei einer Vollbremsung mit Anhängelast auf Glatteis. In diesem Fall ist es gerade sinnvoll, die Bremskraft bereits relativ frühzeitig zu reduzieren, um ein Blockieren der Antriebsräder zu verhindern. Wird nun auf einen bestimmten Schwellwert der tatsächlichen Bremsverzögerung als latenzzeitinitiierendes Ereignis abgestellt, dann würde eine Reduktion der Bremskraft möglicherweise erst sehr spät erfolgen.

Die Reaktion, welche nach Ablauf der Latenzdauer erfolgt, besteht in der Reduktion der Bremskraft. Diese Reaktion kann entweder unmittelbar durch das Verstreichen der Latenzdauer angestoßen werden und/oder aber an das Vorliegen zusätzlicher Bedingungen, wie z.B. die Unterschreitung einer bestimmten Radumfangsgeschwindigkeit oder Drehzahl wenigstens eines Antriebsrades, die Unterschreitung einer bestimmten Drehzahl wenigstens eines elektrischen Antriebsmotors oder die Unterschreitung einer Drehzahlinformation oder Frequenz der elektronischen Fahrsteuerung etc. gebunden sein. Es hängt insoweit von der konkreten Ausgestaltung der erfindungsgemäßen Regelung ab, ob der Ablauf der Latenzdauer nur notwendige oder zugleich auch hinreichende Bedingung für die Reduktion der Bremskraft ist.
7. Kombination der Parameter "Drehzahl wenigstens eines Antriebsrades" und "Latenzzeit"
   Aus Gründen der argumentativen Stringenz waren in den beiden vorausgegangenen Abschnitten eine Blockierschutzeinrichtung mittels drehzahlabhängiger Modulation der Bremskraft und eine Blockierschutzeinrichtung mittels zeitabhängiger Modulation (der Stärke) der Bremskraft zunächst jeweils isoliert dargestellt worden.

In einer vorteilhaften Weiterbildung der vorliegenden Erfindung können diese beiden Ansätze jedoch in vorteilhafter Weise miteinander kombiniert werden. Eine besonders vorteilhafte Form der Kombination besteht darin, dass eine drehzahlbezogene Reduzierung der Bremskraft erst dann initiiert wird, wenn seit Beginn des Bremsvorgangs eine definierte Zeit verstrichen ist. Erst dann würde die Stärke der Bremskraft reduziert werden, sofern eine bestimmte, als kritisch erachtete Radumfangsgeschwindigkeit bzw. Drehzahl wenigstens eines Lauf-/Antriebsrades etc. unterschritten wird. Das Verstreichen einer definierten Latenzdauer ist insoweit notwendige Bedingung, die Unterschreitung einer definierten Drehzahl oder dergleichen hinreichende Bedingung für die Reduktion der Stärke der elektrischen Abbremsung. Maßgeblich für den Beginn des Bremsvorgangs kann dabei, anknüpfend an den obigen Ausführungen, entweder der Moment sein, in dem der Fahrer die Bremse betätigt, oder der Moment, ab dem ein definierter Grenz-/Schwellwert wenigstens einer in Zusammenhang mit der Bremsverzögerung stehenden Variable/Parameter überschritten wird.
8. Zur Reduzierung der Bremskraft ist es möglich, die Stärke der elektrischen bzw. rekuperativen Abbremsung und/oder der mechanischen Abbremsung zu reduzieren. Im letztgenannten Fall kann beispielsweise mittels mindestens eines elektrisch schaltbaren Ventils der Bremsdruck der Friktionsbremsanlage an den Antriebsrädern reduziert werden, sobald sich das Flurförderzeug im unteren, "kritischen" Geschwindigkeitsbereich befindet.
9. Die Reduktion der Stärke der elektrischen und/oder mechanischen Abbremsung kann einstufig, mehrstufig oder stufenlos erfolgen, wobei insbesondere das Ausmaß der Reduktion der Bremskraft in den beiden zuletzt genannten Fällen mit Annäherung an die Drehzahl 0 ansteigen sollte.

Dahinter steht die Überlegung, dass beim Übergang von der Haftreibung in die Gleitreibung zunächst der sogenannte Schlupf zunimmt, sich die Räder eines Flurförderzeugs also bei der Annäherung an die Blockiergrenze zunehmend langsamer drehen, bevor sie schließlich blockieren und somit ganz zum Stillstand kommen. Genau dies soll aber durch die vorliegende Erfindung möglichst verhindert werden, indem die Stärke der Abbremsung bei Annäherung z.B. der Drehzahl der Antriebsräder an den Wert 0 zunehmend stärker reduziert wird.

Die Reduktion der mechanischen und/oder elektrischen Bremskraft kann mit konstanter und/oder abnehmender und/oder zunehmender Grenzrate erfolgen kann. Die Stärke der Reduktion bzw. der jeweiligen Reduktionsschritte kann wahlweise so definiert sein, dass die Reduktion (a.) um einen definierten Betrag, (b.) auf einen definierten Betrag und/oder (c.) relativ, insbesondere prozentual, zu einer relevanten Bezugsgröße erfolgt, beispielsweise dem bei der jeweiligen Restgeschwindigkeit maximal möglichen elektrischen Bremsmoment oder dem aktuellen Verzögerungswunsch des Fahrers.

Der Verzögerungswunsch des Fahrers, also die vom Fahrer intendierte Stärke der Abbremsung, kann erfindungsgemäß beispielsweise anhand der Stellung des Bremspedals, etwa mit Hilfe eines sogenannten Hallsensors, oder anhand des Bremsdrucks in einem oder mehreren Bremskreisen, etwa mit Hilfe eines sogenannten Druckmessumformers, ermittelt werden.

Ein bevorzugtes, erfindungsgemäßes Flurförderzeug ist demzufolge unter anderem dadurch gekennzeichnet, dass die Stärke der elektrischen Abbremsung im oberen Geschwindigkeitsbereich in Abhängigkeit von der vom Fahrer intendierten Stärke der mechanischen Abbremsung moduliert wird, also beispielsweise mit zunehmendem Pedalweg des Bremspedals und/oder mit zunehmendem Bremsdruck in einem oder mehreren Bremskreisen der Betriebsbremse zunimmt.

Im unteren Geschwindigkeitsbereich wird die Stärke der elektrischen und/oder mechanischen Abbremsung dann entsprechend der oben skizzierten Ansätze einstufig, mehrstufig oder stufenlos reduziert, wobei der durch den Fahrer bestimmte und beispielsweise aus der Bremspedalstellung und/oder dem Bremsdruck in wenigstens einem Bremskreis der Betriebsbremse ermittelte Sollwert die Bezugsgröße für die prozentuale Reduktion darstellt.
10. Aus Vereinfachungsgründen ist bei der Beschreibung der Erfindung bislang von unterschiedlichen Antriebsvarianten, beispielsweise Heckantrieb über Differentialgetriebe, Doppelmotor-Heckantrieb oder Allradantrieb, beispielsweise mittels Radmotoren, weitgehend abstrahiert worden.

Die differenzierte Betrachtung unterschiedlicher Antriebsvarianten ist jedoch insofern von Vorteil, da das Potential der vorliegenden Erfindung gerade bei der nach heutigem Stand der Technik gebräuchlichsten Antriebsvariante von elektrisch angetriebenen Flurförderzeugen, insbesondere Hybrid-Fahrersitz-Zugmaschinen oder Elektro-Fahrersitz-Zugmaschinen, nämlich dem Hinterradantrieb über Differentialgetriebe, nicht voll ausgeschöpft werden kann.

Denn bedingt durch das Differential kann hier - gerade bei Kurvenfahrt - die Blockiergrenze am kurveninneren Rad bereits erreicht sein, obwohl sich das kurvenäußere Rad und folglich auch der elektrische Antriebsmotor noch drehen.

Wird daher beispielsweise die Drehzahlinformation bzw. Frequenz der elektronischen Fahrsteuerung, insbesondere AC-Inverter, zur Grundlage der Regelung gemacht, so kann es zumindest theoretisch auch bei einem erfindungsgemäßen Fahrzeug nicht vollkommen ausgeschlossen werden, dass doch noch zumindest ein einzelnes Lauf-/Antriebsrad kurzzeitig blockiert. Trotzdem wird durch die vorliegende Erfindung auch in diesem Fall bereits eine deutliche Verbesserung gegenüber dem Stand der Technik erreicht. Denn solange sich zumindest das kurvenäußere Rad noch dreht, werden auch weiterhin Seitenführungskräfte übertragen, so dass die Fahrstabilität des Flurförderzeugs gewährleistet ist. Da das kurveninnere Rad bei Kurvenfahrt entlastet ist, wird der weitaus größere Teil der Seitenführungskräfte ohnehin durch das kurvenäußere Rad übertragen.

In einer besonderen Variante der Erfindung kann vor diesem Hintergrund an jedem einzelnen Laufrad, insbesondere der Antriebsachse, ein separater Sensor angebracht werden. Dann ist es möglich, die Bremskraft bereits dann zu reduzieren, wenn sich wenigstens eines der (beiden) Räder der Blockiergrenze annähert. So ist hierbei zu beachten, dass auch bei dem Rad, das eigentlich noch über ausreichend Haftung zum Übertragen von Brems- und Seitenführungskräften verfügt, die Bremswirkung heruntergesetzt wird. Weiterhin ist zu beachten, dass eine Signalverarbeitung beim Rückgriff auf zusätzliche Sensorik gegebenenfalls nicht direkt über die Fahrsteuerung erfolgen kann, so dass es zu einer Verringerung der Regelungsgeschwindigkeit kommen könnte.

Besonders geeignet, um in vorteilhafter Weise das volle Potential der vorliegenden Erfindung auszuschöpfen, ist beispielsweise ein Doppelmotorantrieb oder ein Allradantrieb, beispielsweise mittels Radmotoren. Da hier jedes angetriebene Rad von einem eigenen Elektromotor angetrieben und folglich auch elektrisch abgebremst wird, ist es möglich, für jedes der Antriebsräder eine jeweils individuelle Regelung vorzunehmen. Das kann zum Beispiel bedeuten, dass an einem kurveninneren Rad die Stärke der elektrischen Abbremsung bereits reduziert wird, wohingegen am kurvenäußeren Rad bzw. an den kurvenäußeren Rädern noch mit voller Stärke der elektrischen Abbremsung verzögert wird.

### Exemplarische Darstellung einer bevorzugten Aunführungsvariante

Ein Ausführungsbeispiel ist in der Zeichnung dargestellt und wird anhand der Figuren nachfolgend näher erläutert.

Im Einzelnen zeigen:
- Figur 1: Blockiergrenze mit und ohne Anhängelast in Abhängigkeit von der Fahrgeschwindigkeit (Prinzipskizze) und
- Figur 2: Blockiergrenze mit und ohne Anhängelast in Abhängigkeit von der Zeitdauer seit Initiierung des Bremsvorgangs (Prinzipskizze).

Nachfolgend soll nun eine bevorzugte Ausführungsform der Erfindung dargestellt werden, welche große Vorteile mit sich bringt:

Als latenzzeitinitiierendes Ereignis soll die wenigstens fünfzigprozentige, besser jedoch 70-prozentige Betätigung des Bremspedals durch den Fahrer herangezogen werden. Die Latenzzeit soll in Abhängigkeit von der Bremsanfangsgeschwindigkeit definiert werden und sich im Wesentlichen proportional zu dieser Verhalten. Bei Kurvenfahrt soll die Latenzdauer auf 0 gesetzt werden, wenn ein bestimmter Lenkeinschlagwinkel überschritten wird.

Das Verstreichen der Latenzdauer soll in der bevorzugten Ausführungsvariante lediglich notwendig, nicht jedoch hinreichend für eine Reduktion der Bremskraft sein.

Hinreichende Bedingung soll die Unterschreitung einer bestimmten Drehzahl wenigstens eines Antriebsrades sein. Die Radumfangsgeschwindigkeit, ab der eine Reduzierung der Bremskraft erfolgt, soll dabei relativ hoch angesetzt werden, beispielsweise bei ca. 15 km/h. Auch das Ausmaß der Reduktion der rekuperativen Bremskraft soll relativ hoch angesetzt werden und die Reduktionsrampe gegebenenfalls sehr steil, so dass beispielsweise bereits unterhalb einer Radumfangsgeschwindigkeit von 10 km/h keine oder nahezu keine elektrische Abbremsung mehr erfolgt. Der Bremsdruck der mechanischen Friktionsbremsanlage soll ebenfalls herabgesetzt werden, beispielsweise von zuvor 40 Bar auf 20 Bar, d.h. 50%.

Eine gegebenenfalls vorhandene Hillhold-Funktion soll in der bevorzugten Ausführungsvariante während der Dauer der Betätigung der Betriebsbremse deaktiviert werden und erst kurze Zeit, beispielsweise 0,5 Sekunden, nach dem Ende der Betätigung der Betriebsbremse wieder aktiv sein.

## Patentansprüche

1. Flurförderzeug, insbesondere Hybrid-Fahrersitz-Zugmaschine oder Elektro-Fahrersitz-Zugmaschine, wobei wenigstens in einem Bremsmodus des Flurförderzeugs ein als Antriebsmotor zum Antreiben wenigstens eines Laufrades ausgebildeter Elektromotor als Generator zum Erzeugen einer elektrischen Bremskraft ausgebildet ist, wobei wenigstens eine Anti-Blockier-Einheit zum Vermeiden oder Reduzieren eines Blockierens wenigstens eines Laufrades während der Fahrt des Flurförderzeugs vorgesehen ist, wobei
wenigstens ein eine maximale Geschwindigkeit aufweisender, oberer Geschwindigkeitsbereich des Laufrades und/oder des Flurförderzeugs sowie ein den Stillstand aufweisender, unterer Geschwindigkeitsbereich des Laufrades und/oder des Flurförderzeugs vorgesehen sind,
wobei die Anti-Blockier-Einheit wenigstens eine elektrische Kontrolleinheit zum Reduzieren der maximal realisierbaren Bremskraft auf eine realisierte Bremskraft aufweist, so dass im unteren Geschwindigkeitsbereich des Laufrades und/oder des Flurförderzeugs die realisierte Bremskraft kleiner ist als die maximal realisierbare Bremskraft, **dadurch gekennzeichnet, dass** die Kontrolleinheit wenigstens einen einstellbaren Grenzwert umfasst, der den oberen Geschwindigkeitsbereich des Flurförderzeugs vom unteren Geschwindigkeitsbereich des Flurförderzeugs trennt, und wobei mindestens einer der Grenzwerte als Zeitdauer ausgebildet ist, die vom Beginn eines Bremsvorganges bis zum Beginn des unteren Geschwindigkeitsbereichs des Flurförderzeugs dauert.

2. Flurförderzeug nach Anspruch 1, **dadurch gekennzeichnet, dass** die Kontrolleinheit derart ausgebildet ist, dass die Reduktion der Bremskraft durch die Reduktion der maximal realisierbaren elektrischen Bremskraft des Elektromotors und/oder durch die Reduktion der maximal realisierbaren mechanischen Bremskraft der Friktionsbremsanlage erfolgt.

3. Flurförderzeug nach einem der vorgenannten Ansprüche, **dadurch gekennzeichnet, dass** der Grenzwert als Geschwindigkeits-Grenzwert des Flurförderzeugs und/oder als Laufrad-Grenzwert und/oder als Drehzahl-Grenzwert des Elektromotors und/oder als Frequenz-Grenzwert einer elektronischen Fahrsteuerung ausgebildet ist.

4. Flurförderzeug nach einem der vorgenannten Ansprüche, **dadurch gekennzeichnet, dass** der Grenzwert in Abhängigkeit vom Lenkwinkel eines Laufrades und/oder des Lenkradius des Flurförderzeugs ausgebildet ist.

5. Flurförderzeug nach einem der vorgenannten Ansprüche, **dadurch gekennzeichnet, dass** der Grenzwert in Abhängigkeit von der Steigung oder Neigung des Flurförderzeugs ausgebildet ist.

6. Flurförderzeug nach einem der vorgenannten Ansprüche, **dadurch gekennzeichnet, dass** der Grenzwert in Abhängigkeit von der Anhängelast des Flurförderzeugs ausgebildet ist.

7. Flurförderzeug nach einem der vorgenannten Ansprüche, **dadurch gekennzeichnet, dass** der Grenzwert in Abhängigkeit von der Bremsanfangsgeschwindigkeit ausgebildet ist.

8. Flurförderzeug nach einem der vorgenannten Ansprüche, **dadurch gekennzeichnet, dass** der untere Geschwindigkeitsbereich des Flurförderzeugs wenigstens einen Reduktionsfaktor umfasst, wobei der Reduktionsfaktor das Maß der Reduktion von der maximal realisierbaren Bremskraft ist.

9. Flurförderzeug nach einem der vorgenannten Ansprüche, **dadurch gekennzeichnet, dass** der untere Geschwindigkeitsbereich des Flurförderzeugs wenigstens zwei unterschiedliche Abschnitte mit zwei unterschiedlichen Reduktionsfaktoren umfasst.

10. Flurförderzeug nach einem der vorgenannten Ansprüche, **dadurch gekennzeichnet, dass** der untere Geschwindigkeitsbereich des Flurförderzeugs wenigstens einen Abschnitt mit sich stetig änderndem Reduktionsfaktor umfasst.

11. Flurförderzeug nach einem der vorgenannten Ansprüche, **dadurch gekennzeichnet, dass** die Kontrolleinheit wenigstens zwei unterschiedliche Grenzwerte umfasst, wobei in Abhängigkeit der Richtung der Geschwindigkeitsänderung vom oberen zum unteren Geschwindigkeitsbereich oder vom unteren zum oberen Geschwindigkeitsbereich wenigstens einen ersten Grenzwert und einen vom ersten Grenzwert unterschiedlichen, zweiten Grenzwert vorgesehen ist.

## Claims

1. A tow truck, in particular a hybrid driver's seat tractor or electric driver's seat tractor, wherein at least in one braking mode of the tow truck an electric motor, designed as a drive motor for driving at least one wheel, is designed as a generator for generating an electrical braking force, wherein at least one anti-blocking unit is provided to avoid or reduce blocking of at least one wheel during travel of the tow truck, wherein at least an upper speed range of the wheel and/or the tow truck exhibiting a maximum speed, and a lower speed range of the wheel and/or the tow truck exhibiting a stationary condition, are provided,
wherein the anti-blocking unit has at least one electric control unit for reducing the maximum realisable braking force to a realised braking force, so that in the lower speed range of the wheel and/or the tow truck the realised braking force is smaller than the maximum realisable braking force,
**characterised in that** the control unit comprises at least one adjustable limit value which separates the upper speed range of the tow truck from the lower speed range of the tow truck, and wherein at least one of the limit values is designed as a period of time which runs from the beginning of a braking process to the beginning of the lower speed range of the tow truck,

2. The tow truck according to Claim 1, **characterised in that** the control unit is designed so that the braking force is reduced by the reduction in the maximum realisable electrical braking force of the electric motor and/or by the reduction in the maximum realisable mechanical braking force of the friction braking system.

3. The tow truck according to any one of the preceding claims,
**characterised in that** the limit value is designed as a speed limit value of the tow truck and/or as a wheel limit value and/or as a speed limit value of the electric motor and/or as a frequency limit value of an electronic drive control.

4. The tow truck according to any one of the preceding claims,
**characterised in that** the limit value is designed as a function of the steering angle of a wheel and/or the steering radius of the tow truck.

5. The tow truck according to any one of the preceding claims,
**characterised in that** the limit value is designed as a function of the inclination or declination of the tow truck.

6. The tow truck according to any one of the preceding claims,
**characterised in that** the limit value is designed as a function of the trailer load of the tow truck.

7. The tow truck according to any one of the preceding claims,
**characterised in that** the limit value is designed as a function of the initial braking speed.

8. The tow truck according to any one of the preceding claims,
**characterised in that** the lower speed range of the tow truck comprises at least one reduction factor, wherein the reduction factor is the measure of the reduction in the maximum realisable braking force.

9. The tow truck according to any one of the preceding claims,
**characterised in that** the lower speed range of the tow truck comprises at least two different sections with two different reduction factors.

10. The tow truck according to any one of the preceding claims,
**characterised in that** the lower speed range of the tow truck comprises at least one section with a constantly variable reduction factor.

11. The tow truck according to any one of the preceding claims,
**characterised in that** the control unit comprises at least two different limit values, wherein, as a function of the direction of the speed variation from the upper to the lower speed range, or from the lower to the upper speed range, at least a first limit value and a second limit value different from the first limit value are provided.

## Revendications

1. Chariot de manutention, en particulier véhicule tracteur hybride à conducteur porté assis ou véhicule tracteur électrique à conducteur porté assis, dans lequel un moteur électrique configuré comme un moteur d'entraînement pour entraîner au moins une roue est conçu sous forme de générateur pour produire une force de freinage électrique au moins dans un mode de freinage du chariot de manutention, au moins une unité antiblocage étant prévue pour éviter ou réduire le blocage d'au moins une roue pendant le déplacement du chariot de manutention,
au moins une plage de vitesse supérieure de la roue et/ou du chariot de manutention présentant une vitesse maximale ainsi qu'une plage de vitesse inférieure de la roue et/ou du chariot de manutention présentant un point mort étant prévues,
l'unité antiblocage présentant au moins une unité de commande électrique pour réduire la force de freinage maximale pouvant être atteinte à une force de freinage atteinte, de manière à ce que dans la plage de vitesse inférieure de la roue et/ou du chariot de manutention, la force de freinage atteinte soit inférieure à la force de freinage maximale pouvant être atteinte, **caractérisé en ce que** l'unité de commande
comprend au moins une valeur limite réglable séparant la plage de vitesse supérieure du chariot de manutention de la plage de vitesse inférieure du chariot de manutention et au moins l'une des valeurs limites est conçue comme une durée s'écoulant du début d'un processus de freinage jusqu'au début de la plage de vitesse inférieure du chariot de manutention.

2. Chariot de manutention selon la revendication 1, **caractérisé en ce que** l'unité de commande est conçue de manière à ce que la réduction de la force de freinage s'effectue en réduisant la force de freinage électrique maximale pouvant être atteinte par le moteur électrique et/ou en réduisant la force de freinage mécanique maximale pouvant être atteinte par le système de freinage par friction.

3. Chariot de manutention selon l'une des revendications précédentes, **caractérisé en ce que** la valeur limite est configurée en tant que valeur limite de vitesse du chariot de manutention et/ou en tant que valeur limite de roue et/ou en tant que valeur limite du régime du moteur électrique et/ou en tant que valeur limite de fréquence d'une commande de conduite électronique.

4. Chariot de manutention selon l'une des revendications précédentes, **caractérisé en ce que** la valeur limite est configurée en fonction de l'angle de braquage d'une roue et/ou du rayon de braquage du chariot de manutention.

5. Chariot de manutention selon l'une des revendications précédentes, **caractérisé en ce que** la valeur limite est configurée en fonction de l'inclinaison du chariot de manutention.

6. Chariot de manutention selon l'une des revendications précédentes, **caractérisé en ce que** la valeur limite est configurée en fonction de la charge remorquée par le chariot de manutention.

7. Chariot de manutention selon l'une des revendications précédentes, **caractérisé en ce que** la valeur limite est configurée en fonction de la vitesse en début de freinage.

8. Chariot de manutention selon l'une des revendications précédentes, **caractérisé en ce que** la plage de vitesse inférieure du chariot de manutention comprend au moins un facteur de réduction, le facteur de réduction étant la mesure de la réduction de la force de freinage maximale pouvant être atteinte.

9. Chariot de manutention selon l'une des revendications précédentes, **caractérisé en ce que** la plage de vitesse inférieure du chariot de manutention comprend au moins deux segments différents avec deux facteurs de réduction différents.

10. Chariot de manutention selon l'une des revendications précédentes, **caractérisé en ce que** la plage de vitesse inférieure du chariot de manutention comprend au moins un segment avec un facteur de réduction changeant constamment.

11. Chariot de manutention selon l'une des revendications précédentes, **caractérisé en ce que** l'unité de commande comprend au moins deux valeurs limites différentes, au moins une première valeur limite et une seconde valeur limite différente de la première valeur limite étant prévues en fonction de la direction du changement de vitesse de la plage de vitesse supérieure à la plage de vitesse inférieure ou de la plage de vitesse inférieure à la plage de vitesse supérieure.
